# EUROPÄISCHE PATENTSCHRIFT

(11) **EP 2 456 641 B1**
(45) Veröffentlichungstag und Bekanntmachung des Hinweises auf die Patenterteilung: **18.03.2015**
(21) Anmeldenummer: 10741908.7
(22) Anmeldetag: 21.07.2010
(51) Int. Cl.: B60R 22/02, B60R 22/405, B60R 22/41

(54) **GURTAUFROLLER FÜR EINEN FAHRZEUGSICHERHEITSGURT**
RETRACTOR FOR A VEHICLE SEAT BELT
ENROULEUR POUR UNE CEINTURE DE SÉCURITÉ DE VÉHICULE

(30) Priorität: 21.07.2009 DE 102009034048
(43) Veröffentlichungstag der Anmeldung: 30.05.2012
(73) Patentinhaber: KEY SAFETY SYSTEMS, INC., Sterling Heights, MI 48314 (US)
(72) Erfinder: SPECHT, Martin, 82340 Feldafing (DE); WOLFF, Rainer, 82346 Andechs (DE)
(74) Vertreter: Gislon, Gabriele
(86) Internationale Anmeldenummer: PCT/EP2010/004469
(87) Internationale Veröffentlichungsnummer: WO 2011/009608

(56) Entgegenhaltungen:
- FR-A1- 2 667 032
- US-A1- 2009 057 470
- US-B1- 6 334 628

## Beschreibung

Die Erfindung betrifft eine Dreipunktsicherheitsgurtanordnung für einen Fahrzeugsicherheitsgurt nach dem Oberbegriff des Patentanspruches 1.

Eine derartige Dreipunktsicherheitsgurtanordnung ist aus FR 2 667 032 A1 bekannt. Diese weist einen Gurtaufroller zum Aufwickeln und Abwickeln eines Sicherheitsgurtes auf. In aller Regel beinhaltet ein derartiger Gurtaufroller auch eine gurtbandsensitive Blockiereinrichtung, welche bei einem Gurtbandauszug mit überhöhter Beschleunigung den Gurtbandauszug blockiert. Am bekannten Sicherheitsgurt sind zwei Steckzungen vorgesehen, die in an beiden Seiten eines Fahrzeugsitzes vorgesehene Gurtschlösser eingesteckt werden können. Die eine Steckzunge ist am Gurtbandende befestigt und die andere Steckzunge ist am Sicherheitsgurt verschiebbar gelagert. Der Fahrzeugsitz und die Sitzrückenlehne sind umklappbar oder verschwenkbar ausgebildet.

Aus US 2009/057470 A1 ist eine Dreipunktsicherheitsanordnung bekannt, deren Gurtaufroller eine Hemmungseinrichtung für die gurtbandsensitive Blockiereinrichtung aufweist. Diese Hemmungseinrichtung setzt die gurtbandsensitive Blockiereinrichtung inaktiv, wenn der Sicherheitsgurt vollständig am Gurtaufroller aufgewickelt ist. Hierdurch soll gewährleistet werden, dass bei Beginn des Gurtbandauszuges, beispielsweise beim Anlegen des Sicherheitsgurtes, eine Blockierung des Sicherheitsgurtes durch die gurtbandsensitive Blockiereinrichtung verhindert wird. Bei nach dem Beginn des Gurtbandauszuges weiterem Bandauszug kann die gurtbandsensitive Blockiereinrichtung durch zu raschen Bandauszug blockiert werden.

Beim Nachvorneklappen von Sitzrückenlehnen, in die der Sicherheitsgurt ganz oder teilweise integriert ist kann es zu einer überhöhten Beschleunigung des Gurtbandauszuges und damit zur Aktivierung der gurtbandsensitiven Blockiereinrichtung kommen.

Aufgabe der Erfindung ist es, eine Dreipunktsicherheitsgurtanordnung der eingangs genannten Art zu schaffen, bei welcher beim Umklappen des Fahrzeugsitzes oder der Sitzlehne des Fahrzeugsitzes, in welchem die Sicherheitsgurtanordnung ganz oder teilweise integriert ist, auch dann ungehindert erreicht wird, wenn nur die am Sicherheitsgurt verschiebbar gelagerte Steckzunge aus dem Gurtschloss gelöst ist.

Diese Aufgabe wird durch die Merkmale des Patentanspruches 1 gelöst. Die Unteransprüche beinhalten vorteilhafte Weiterbildungen der Erfindung.

Beim erfindungsgemäßen Gurtaufroller ist eine Hemmungseinrichtung vorgesehen, welche mit der Gurtspule in Drehverbindung steht, wobei die Hemmungseinrichtung am Anfang des Gurtbandauszugs während einer bestimmten Gurtbandauszugslänge die Aktivierung der gurtbandsensitiven Blockiereinrichtung verhindert. In bevorzugter Weise dreht sich die Hemmungseinrichtung mit Untersetzung mit, so dass am Anfang des Gurtbandauszugs bis zu einer bestimmten Gurtbandauszugslänge eine gurtbandsensitive Blockierung des Sicherheitsgurtes verhindert wird.

In vorteilhafter Weise kann die Hemmungseinrichtung eine um die Gurtspulenachse mit der untersetzten Drehzahl bewegte Kreissegmentbahn aufweisen, entlang welcher die mit der Gurtspule mit der gleichen Drehzahl wie die Gurtspule mitdrehende gurtbandsensitive Sperreinrichtung, insbesondere Klinke zum Verhindern einer die Blockierung einleitenden Bewegung geführt wird.

Hierzu kann die Hemmungseinrichtung eine Anschlagfläche aufweisen, entlang welcher zur Verhinderung der die Blockierung einleitenden Bewegung die an der Anschlagfläche anliegende gurtbandsensitive Sperreinrichtung, insbesondere Klinke geführt wird. Die Anschlagfläche erstreckt sich auf einer Kreissegmentbahn um die Gurtspulenachse.

Hierzu kann die gurtbandsensitive Klinke ein Anschlagelement aufweisen. Es ist auch möglich die Kreissegmentbahn, entlang welcher die gurtbandsensitive Sperreinrichtung, insbesondere Klinke geführt wird, als kreissegmentförmige Eingriffsbahn, in welche ein in der Klinke oder der Sperreinrichtung vorgesehenes Eingriffselement eingreift, auszubilden.

Die bestimmte Bandauszugslänge am Anfang des Bandauszugs ist so bemessen, dass bei am Fahrzeuginsassen angelegtem Sicherheitsgurt die Aktivierung der gurtbandsensitiven Blockiereinrichtung wieder möglich ist. Dementsprechend sind die Länge der Kreissegmentbahn in der Hemmungseinrichtung, entlang welcher die gurtbandsensitive Sperreinrichtung zur Verhinderung der Blockierung geführt wird, und die zwischen der Gurtspulendrehung und der Drehung der Hemmungseinrichtung, insbesondere der Kreissegmentbahn wirkende Untersetzung entsprechend aufeinander abgestimmt. Beispielsweise kann während drei bis fünf Gurtspulenumdrehungen je nach Einbauverhältnissen im Fahrzeug die gurtbandsensitive Blockiereinrichtung durch die Hemmungseinrichtung inaktiv gehalten werden.

In vorteilhafter Weise ist bereits unmittelbar bei Beginn des Bandauszugs die Aktivierung der gurtbandsensitiven Blockiereinrichtung verhindert. Das bedeutet, dass auch am Ende, d. h. beim Stoppen des Bandaufwickelvorgangs die gurtbandsensitive Blockiereinrichtung durch die Hemmungseinrichtung inaktiv gehalten wird. Hierdurch wird beim abrupten Stoppen des Bandaufwickelvorgangs (Bandeinzugs) in die Parkposition eine Aktivierung der gurtbandsensitiven Blockiereinrichtung verhindert.

In vorteilhafter Weise ist zur Erzielung der gegenüber der Gurtspulendrehung untersetzten Drehung der Hemmungseinrichtung ein Untersetzungsgetriebe zwischen die Gurtspule und die Hemmungseinrichtung geschaltet. Dieses Untersetzungsgetriebe kann ein um die Gurtspulenachse drehbares Antriebsrad sowie ein vom Antriebsrad angetriebenes Steuerrad aufweisen. Antriebsrad und Steuerrad sind vorzugsweise als Zahnräder ausgebildet, wobei durch entsprechende Bemessung der Verzahnungsdurchmesser die Untersetzung erreicht wird. Das Steuerrad dreht dabei mit gegenüber der Gurtspule verringerter Drehzahl, welche auf die mitgedrehte Hemmungseinrichtung und insbesondere auf die kreissegmentförmige Führungsbahn der Hemmungseinrichtung übertragen wird.

Das Untersetzungsverhältnis und die Länge der Kreissegmentbahn in der Hemmungseinrichtung sind so bemessen, dass die Aktivierung der gurtbandsensitiven Blockiereinrichtung bis zu einer Bandauszugslänge verhindert wird, welche annähernd für das Angurten des Fahrzeuginsassen erforderlich ist. Ferner kann die Aktivierung der gurtbandsensitiven Blockiereinrichtung bis zu einer Bandauszugslänge verhindert werden, welche im Falle eines ganz oder teilweise im Sitz integrierten Sicherheitsgurtes beim Umklappen der Sitzrückenlehne von der Gurtspule abgezogen wird. Insbesondere kann es sich hierbei auch um einen im Fontbereich des Fahrzeugs zur Vergrößerung des Kofferraums vorgesehenen Fahrzeugsitz oder eine dort angeordnete Sitzbank handeln.

Der erfindungsgemäße Gurtaufroller eignet sich bevorzugt für die Verwendung bei Fahrzeugsitzen, welche zur Vergrößerung des Gepäckraumes im Fahrzeug klappbar und insbesondere im Laderaumboden versenkbar vorgesehen sind. Bei derartigen Fahrzeugsitzen sind häufig an beiden Sitzseiten Gurtschlösser vorgesehen. Der dazugehörige Gurtaufroller besitzt an seinem Sicherheitsgurt zwei Steckzungen, von denen die eine Steckzunge in das eine Gurtschloss, insbesondere in das Gurtschloss, welches sich an der Seite befindet, an welcher der Gurtaufroller angeordnet ist, und die andere Steckzunge zur Bildung eines angelegten Dreipunktsicherheitsgurtes in das auf der anderen Sitzseite befindliche Gurtschloss eingesteckt werden. Beim Lösen des Sicherheitsgurtes wird häufig nur eine der beiden Steckzungen aus dem Gurtschloss gelöst, so dass eine Steckzunge in einem der Gurtschlösser, insbesondere in dem Gurtschloss, welches an der Sitzseite liegt, an welcher sich auch der Gurtaufroller am Fahrzeugsitz, insbesondere in der Sitzlehne oder am Fahrzeugaufbau, insbesondere im Dachbereich befindet. Damit beim Klappen und insbesondere beim Versenken des Sitzes, bei welchem auch die Gurtschlösser mit verschwenkt werden, das Ausziehen des Sicherheitsgurtes aus dem Gurtaufroller unbehindert erfolgen kann, wirkt die Hemmungseinrichtung in der oben beschriebenen Weise auf die gurtbandsensitive Blockiereinrichtung.

In bevorzugter Weise kann zusätzlich eine zweite Hemmungseinrichtung vorgesehen sein, welche die Aktivierung der fahrzeugsensitiven Blockiereinrichtung am Anfang des Gurtbandauszugs während einer bestimmten Gurtbandauszugslänge verhindert. Dabei wird die Bewegung der zweiten Hemmungseinrichtung durch die Drehung der Gurtspule über ein zweites Getriebe, insbesondere Untersetzungsgetriebe gesteuert. Vorzugsweise wirkt dabei die Hemmungseinrichtung auf die fahrzeugsensitive Blockiereinrichtung parallel und zeitgleich mit der Hemmungseinrichtung, welche auf die gurtbandsensitive Blockiereinrichtung einwirkt.

In bevorzugter Weise sind die drehbaren Bestandteile der Hemmungseinrichtung für die gurtbandsensitive Blockiereinrichtung und des zugeordneten Getriebes und/oder der Hemmungseinrichtung für die fahrzeugsensitive Blockiereinrichtung und des zugeordneten Getriebes an einem gemeinsamen Wellenteil und an einem Gehäuseteil, insbesondere Gehäusekappe drehbar gelagert. Hierdurch wird ein vereinfachter Zusammenbau der jeweiligen Hemmungseinrichtung und insbesondere beider Hemmungseinrichtungen und des zugeordneten Getriebes oder der zugeordneten Getriebe im Gehäuseteil ermöglicht. Die so im Gehäuseteil, insbesondere in der auf den Rahmen des Gurtaufrollers aufsetzbaren Gehäusekappe, vormontierte Anordnung kann dann mit der Mechanikseite des Gurtaufrollers, welcher die gurtbandsensitive und/oder fahrzeugsensitive Blockiereinrichtung aufweist, lagegerecht verbunden werden.

Die Einwirkung der Hemmungseinrichtung, sowohl bei der gurtbandsensitiven Blockiereinrichtung, als auch bei der fahrzeugsensitiven Blockiereinrichtung ist derart, dass die beweglichen Teile der jeweiligen Blockiereinrichtung ortsfest fixiert sind, so dass Geräusche, welche von diesen Teilen herrühren können, gedämmt sind.

Anhand der Figuren wird an Ausführungsbeispielen die Erfindung noch näher erläutert. Es zeigt:
- Fig. 1: eine gurtbandsensitive Blockiereinrichtung eines Gurtaufrollers mit einem Ausführungsbeispiel einer Hemmungseinrichtung, mit welcher die Aktivierung der gurtbandsensitiven Blockiereinrichtung während einer bestimmten Gurtbandauszugslänge verhindert wird, in Explosivdarstellung;

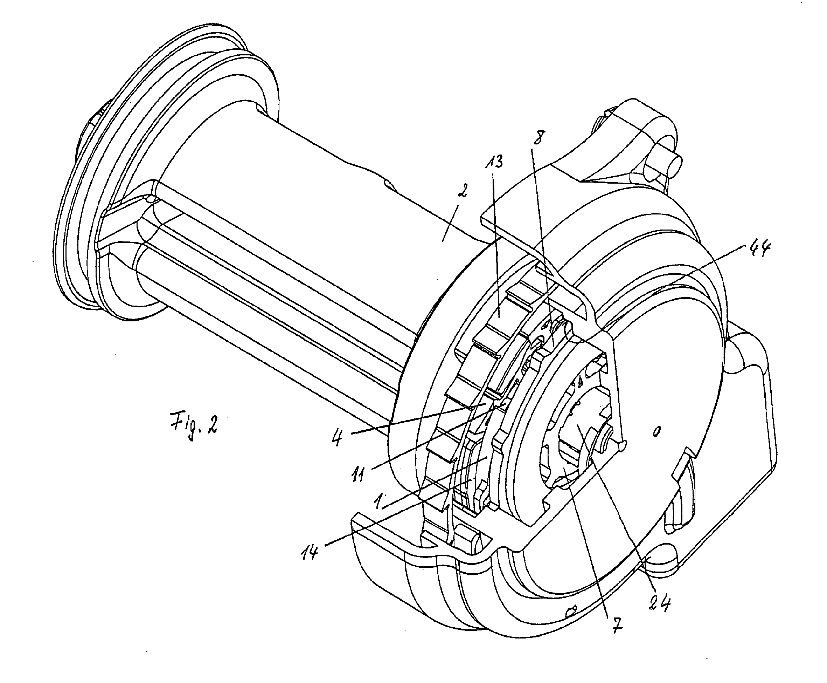

- Fig. 2: das Ausführungsbeispiel in zusammengebautem Zustand in perspektivischer Ansicht von schräg rechts oben;

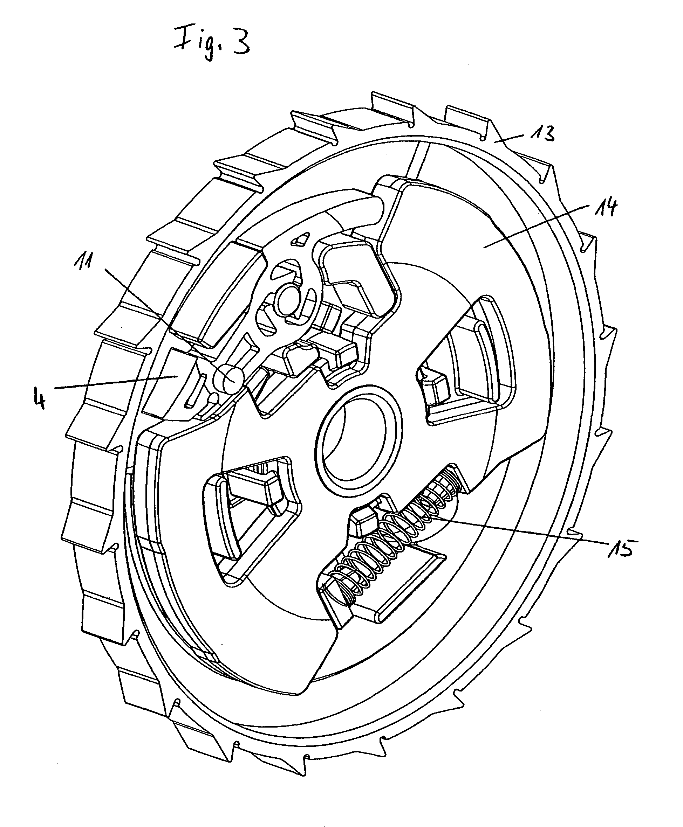

- Fig. 3: die gurtbandsensitive Blockiereinrichtung mit einer an die Erfindung angepassten Klinke als Ausführungsbeispiel;
- Fig. 4: in schnittbildlicher Darstellung ein Ausführungsbeispiel in zusammengebauten Zustand, bei welchem auch eine Hemmungseinrichtung für die fahrzeugsensitive Blockiereinrichtung vorgesehen ist;
- Fig. 5: eine Explosivdarstellung das in Figur 4 dargestellten Ausführungsbeispiels;
- Fig. 6: eine schnittbildliche Darstellung entlang einer Schnittebene A-A in Figur 4;
- Fig. 7: eine schnittbildliche Darstellung entlang einer Schnittebene B-B in Figur 4; und
- Fig. 8: eine schematische Darstellung der Anordnung zweier Gurtschlösser und des Gurtaufrollers, insbesondere bei der Verwendung von dem Ladeboden eines Fahrzeugs mit versenkbaren Fahrzeugsitzen

Die in den Figuren dargestellten Ausführungsbeispiele zeigen an der Mechanikseite eines Gurtaufrollers für einen Fahrzeugsicherheitsgurt eine gurtbandsensitive Blockiereinrichtung 12 und eine Hemmungseinrichtung 1, mit welcher am Anfang des Gurtbandauszugs während einer bestimmten Gurtbandauszugslänge die Aktivierung der gurtbandsensitiven Blockiereinrichtung 12 verhindert wird.

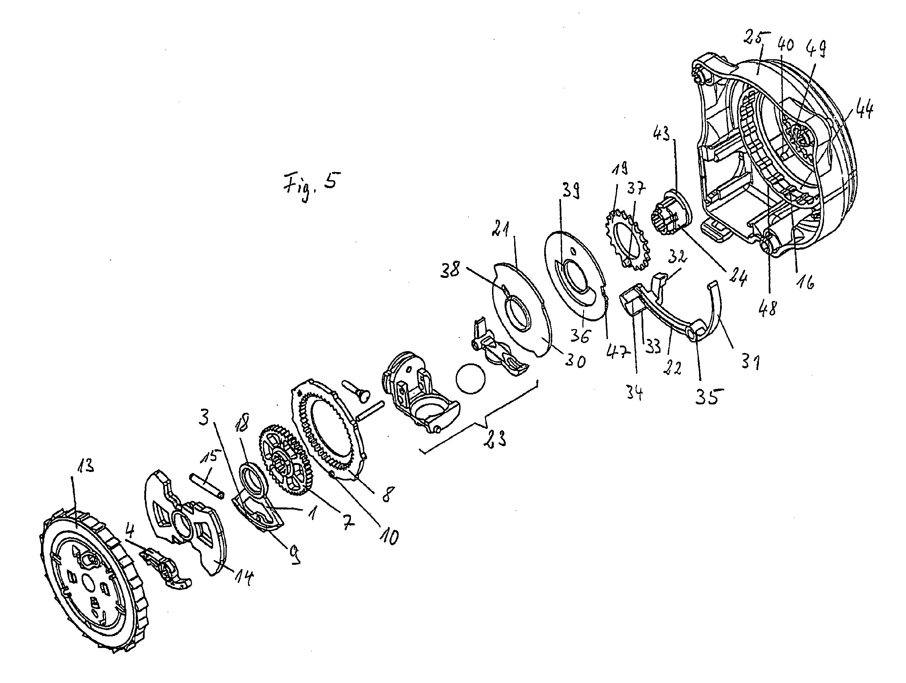

Die gurtbandsensitive Blockiereinrichtung 12 beinhaltet eine an einer Gurtspule 2 des Gurtaufrollers beweglich, insbesondere schwenkbar gelagerte Trägheitsmasse 14, welche mit Hilfe einer Feder 15 in eine entriegelte Stellung vorgespannt wird. Die Trägheitsmasse 14 wirkt mit einer Steuerfläche auf eine gurtbandsensitive Klinke 4, welche ebenfalls beweglich an der Gurtspule 2 gelagert ist. Es ist auch möglich anstelle der Klinke ein anderes geeignetes Eingriffsteil zu verwenden oder die Klinke bzw. das Eingriffsteil einstückig mit der Trägheitsmasse auszubilden. Hierdurch wird eine gurtbandsensitive Sperreinrichtung gebildet. Bei Drehung der Gurtspule 2 mit überhöhter Drehbeschleunigung bewegt sich die Trägheitsmasse 14 gegen die Kraft der Feder 15 und rückt die Klinke 4 in einen Blockiereingriff mit einer Blockierinnenverzahnung 16 (Figur 5). Diese Blockierverzahnung 16 kann an einem ortsfesten Gehäuseteil 25 des Gurtaufrollers oder einem Steuerteil, auf welches die Drehbewegung der Gurtspule infolge des Klinkeneingriffs zur Betätigung einer Hauptblockierklinke übertragen wird, vorgesehen sein. Die Hauptblockierklinke greift dabei in ein mit der Gurtspule drehfest verbundenes Klinkenrad 13. Eine derart wirkende gurtbandsensitive Blockiereinrichtung und Hauptblockiereinrichtung sind beispielsweise aus EP 1 003 654 B1 bekannt.

Die Hemmungseinrichtung 1 besteht beim Ausführungsbeispiel aus einer kreissektorförmigen Platte, an welcher eine Kreissegmentbahn 3 in Form einer Anschlagsfläche vorgesehen ist. Die Hemmungseinrichtung 1 ist drehbar um eine Gurtspulenachse 6, um welche auch die Gurtspule 2 beim Bandaufwickeln und Gurtbandauszug sich dreht, gelagert. Die eine Führungsbahn bildende Anschlagfläche erstreckt sich im Wesentlichen parallel zur Gurtspulenachse 6 und verläuft auf einem Kreissegmentbogen um die Gurtspulenachse 6. Die Hemmungseinrichtung 1 befindet sich beim dargestellten Ausfürhungsbeispiel zwischen der gurtbandsensitiven Blockiereinrichtung 12 und dem Untersetzungsgetriebe 5.

An der gurtbandsensitiven Klinke 4 ist ein Anschlagelement 11 in Form eines Anschlagstiftes angeformt, welcher während einer bestimmten Gurtbandauszugslänge am Anfang des Gurtbandauszugs zur Anlage gebracht werden kann. Hierdurch wird, wie im Einzelnen noch erläutert wird, die Aktivierung der gurtbandsensitiven Blockiereinrichtung 12 verhindert.

Die Anschlagfläche bildet eine Führungsbahn, entlang welcher das Anschlagelement 11 geführt wird. Anstelle der Anschlagfläche kann die Führungsbahn an der Hemmungseinrichtung 1 auch durch eine kreissegmentförmige Eingriffsstelle, beispielsweise Eingriffsnut gebildet sein, in welche ein entsprechend ausgebildetes Eingriffselement an der Klinke 4 anstelle des stiftförmigen Anschlagelementes 11 eingreift. Anstelle der plattenförmigen Ausbildung der Hemmungseinrichtung 1 können auch Verbindungsstege oder ein Verbindungsrahmen vorgesehen sein mit welchem die kreissegmentförmige Führungsbahn um die Gurtspulenachse 6 drehbar gelagert ist.

Zur Übertragung der Drehbewegung der Gurtspule 2 auf die Hemmungseinrichtung 1 dient ein Untersetzungsgetriebe 5. Dieses besteht aus einem Antriebsrad 7, welches drehbar um die Gurtspulenachse 6 gelagert ist und in Antriebsdrehverbindung mit der Gurtspule 2 über eine Antriebswelle 17 steht. An dieser Antriebswelle 17 oder an einem Wellenteil 24 kann die Hemmungseinrichtung 1 mit einem Ringlager 18 drehbar gelagert sein. Das Untersetzungsgetriebe 5 weist ferner ein Steuerrad 8 auf, welches seine Drehbewegung auf die Hemmungseinrichtung 1 überträgt. Das Antriebsrad 7 ist als Innenrad und das Steuerrad 8 ist als Außenrad ausgebildet. Beim dargestellten Ausführungsbeispiel steht das Antriebsrad 7 mit seiner Außenverzahnung in drehmomentübertragendem Eingriff mit der Innenverzahnung des Steuerrades 8. Beim Drehantrieb des Antriebsrads 7, welches über die Antriebswelle 17 drehfest mit der Gurtspule 2 verbunden ist, wird das Steuerrad 8 mit verringerter Drehzahl gedreht, wobei die Drehachse des Steuerrades 8 sich exzentrisch um die Gurtspulenachse 6 bewegt. Hierzu ist am Gehäuseteil 25 eine innen umlaufende exzentrische Führungsfläche 44 vorgesehen. Für die Übertragung der Drehbewegung auf die Hemmungseinrichtung 1 ist am Steuerrad 8 ein Mitnehmerstift 10 vorgesehen, welcher in ein an der Hemmungseinrichtung 1 vorgesehenes Langloch 9 eingreift. Auf diese Weise wird die Drehverbindung zwischen dem Steuerrad 8 und der Hemmungseinrichtung 1 hergestellt.

Das Untersetzungsgetriebe 5 kann auch eine andere Konstruktion aufweisen. Beispielsweise kann zwischen dem Antriebsrad 7 und dem Steuerrad 8 ein Zwischenrad vorgesehen sein, wobei das Steuerrad 8, dann auch um die Gurtspulenachse 6 drehbar gelagert sein kann. In diesem Fall kann die Kreissegmentbahn 3, insbesondere Anschlagsfläche auch am Steuerrad 8 angeordnet sein.

Beim dargestellten Ausführungsbeispiel befindet sich die Klinke 4 am Ende des Bandaufwickelvorgangs und am Anfang des Gurtbandauszugs in Eingriff mit der Kreissegmentbahn 3, welche an der Hemmungseinrichtung 1 durch die Anschlagfläche verkörpert wird. Beim Gurtbandauszug wird die Gurtspule um die Gurtspulenachse 6 gedreht. Diese Drehbewegung wird mit der gleichen Drehzahl auf das Antriebsrad 7 übertragen. Aufgrund der unterschiedlichen Durchmesser der Verzahnungen am Antriebsrad 7 und am Steuerrad 8 wird das Steuerrad 8 mit verminderter Drehzahl mitgedreht, wobei wie schon erläutert sich seine Drehachse exzentrisch um die Gurtspulenachse 6 bewegt. Durch den Dreheingriff, welcher zwischen dem Steuerrad 8 und der Hemmungseinrichtung 11 mit Hilfe des sich bezüglich der Gurtspulenachse 6 radial erstreckenden Langloches 9 und des darin eingreifenden Mitnehmerstiftes 10 gebildet wird, wird die Drehbewegung mit verminderter Drehzahl auf die Hemmungseinrichtung 1 übertragen.

Aufgrund der unterschiedlichen Durchmesser der Verzahnungen am Antriebsrad 7 und am Steuerrad 8, wird die Drehbewegung der Gurtspule 2 mit Untersetzung auf die Hemmungseinrichtung 1 übertragen. Während des Gurtbandauszugs ist die Klinke 4 über das stiftförmige Anschlagelement, welches sich ebenfalls parallel zur Gurtspulenachse 6 erstreckt, in Anlage an der Anschlagfläche 3. Die Klinke 4 und das Anschlagelement 11 drehen sich mit der gleichen Drehzahl wie die Gurtspule 2, während die kreissegmentförmige Anschlagfläche 3 sich mit dem gegenüber verringerter Drehzahl ebenfalls um die Gurtspulenachse 6 dreht. Die Untersetzung sowie die Länge der Kreissegmentbahn 3 an der Anschlagfläche sind so bemessen, dass beginnend mit dem Gurtbandauszug während einer bestimmten Gurtbandauszugslänge, die geringer ist als die für das Angurten des Fahrzeuginsassen benötigte Gurtbandauszugslänge, die Klinke 4 durch den Eingriff an der Anschlagfläche, außer Eingriff mit der Blockierinnenverzahnung 16 gehalten wird. Diese dabei bewirkte Inaktivierung der gurtbandsensitiven Blockiereinrichtung erfolgt unabhängig von der Beschleunigung, mit welcher der Gurtbandauszug durchgeführt wird. Bei Erreichen der vorbestimmten Gurtbandauszugslänge verlässt das stiftförmige Anschlagelement 11 die Anschlagfläche, sodass die gurtbandsensitive Blockiereinrichtung 12 insbesondere bei am Fahrzeuginsassen angelegtem Sicherheitsgurt aktiviert werden kann.

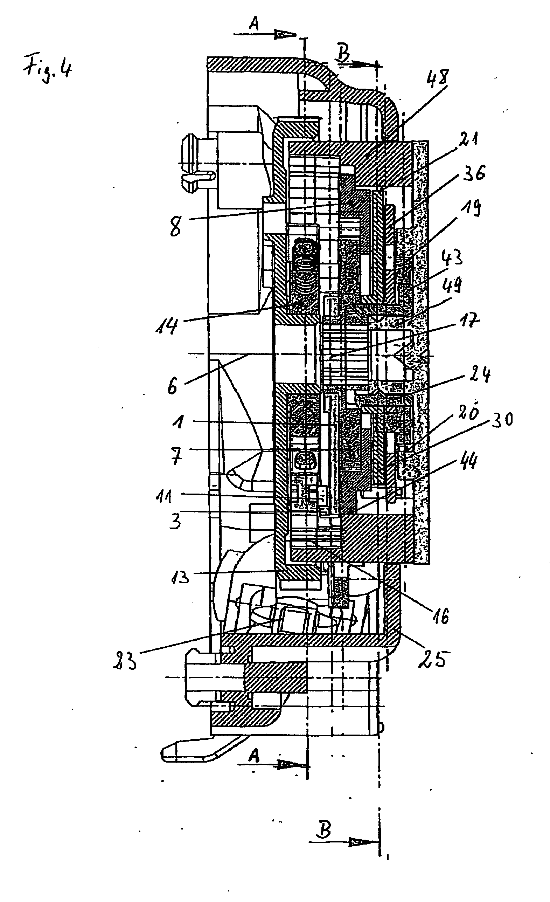

Da die Hemmungseinrichtung 1 zur Deaktivierung der gurtbandsensitiven Blockiereinrichtung zwischen der Parkposition, welche bei vollständig aufgewickeltem tem Sicherheitsgurt vorliegt, und einer bestimmten Gurtbandauszugslänge, welche annähernd der Gurtbandauszugslänge für das Angurten des Sicherheitsgurtes benötigt wird, oder einer geringeren Gurtbandauszugslänge wirksam ist, kann die erfindungsgemäße Hemmungseinrichtung auch bei solchen Gurtaufrollern zum Einsatz gebracht werden, bei denen eine Kindersitzverriegelung oder eine Verriegelung von voluminösen Gegenständen mit Hilfe des Sicherheitsgurtes erreicht werden soll. Derartige Gurtaufroller sind beispielsweise aus DE 199 51 791 oder aus EP 0 625 449 A1 bekannt. Hierzu kann, wie anhand der Figuren 4 und 5 noch erläutert wird, eine um die Gurtspulenachse 6 drehbare Steuerscheibe 36 vorgesehen sein, die mit einem Betätigungselement 22 zusammenwirkt. Die Verriegelung wird dabei mittels eines am Betätigungselement 22 vorgesehenen Eingriffsteils 34, welches am Klinkenrad 13 in Eingriff kommt, herbeigeführt.

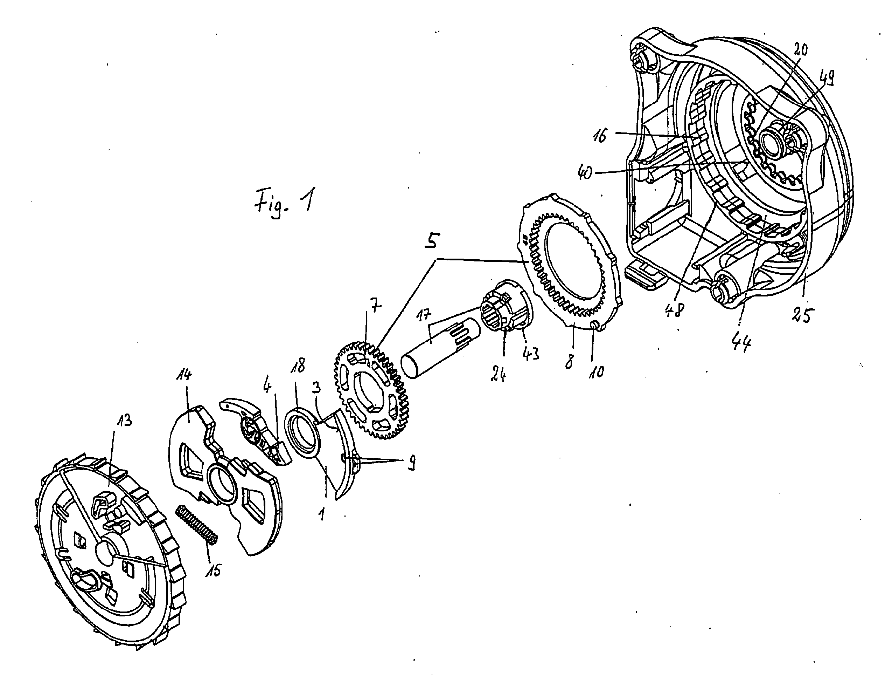

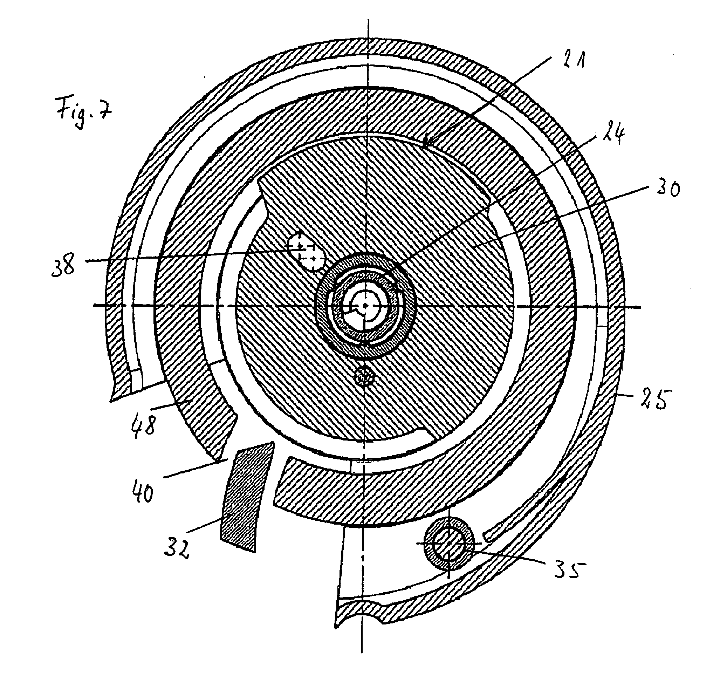

Bei dem in den Figuren 4 bis 7 dargestellten Ausführungsbeispiel ist zusätzlich zu der Hemmungseinrichtung 1 für die gurtbandsensitive Blockiereinrichtung 12, wie sie in Figur 1 dargestellt ist, eine zweite Hemmungseinrichtung, im Wesentlichen bestehend aus einer an einer Steuerscheibe 30 vorgesehenen Steuerfläche 21, welche mit dem Betätigungselement 22 zusammenwirkt, vorgesehen. Diese zweite Hemmungseinrichtung wirkt deaktivierend auf eine fahrzeugsensitive Blockiereinrichtung 23. Diese Deaktivierung der fahrzeugsensitiven Blockiereinrichtung 23 erfolgt zeitgleich mit der oben erläuterten Deaktivierung der gurtbandsensitiven Blockiereinrichtung.

Zur Steuerung der zweiten Hemmungseinrichtung ist ein Getriebe vorgesehen, welches die Drehbewegung der Gurtspule 2 auf die Steuerscheibe 30 überträgt. Dieses Getriebe besteht aus einem Antriebsrad 19 und einem Innenzahnkranz 20, welcher an der Innenseite des Gehäuseteils 25 vorgesehen ist. Das Antriebsrad 19 ist drehbar auf dem Wellenteil 24 an einem Exzenter 43 dieses Wellenteils gelagert. Die Drehbewegung der Gurtspule 2 wird über das Wellenteil 24 auf das Antriebsrad 19 übertragen, wobei aufgrund der exzentrischen Lagerung das Antriebsrad 19 um die Gurtspulenachse 6 eine exzentrische Bewegung ausführt und dabei mit seinem Außenzahnkranz in Eingriff mit dem Innenzahnkranz 20 steht. Auf diese Weise erreicht man eine Untersetzung der Drehzahl der Gurtspule 2 mit Hilfe des Getriebes, da der Durchmesser des Innenzahnkranzes 20 größer ist als der Durchmesser des Außenzahnkranzes des Antriebsrades 19. Die Drehbewegung des Antriebsrades 19 wird über einen Mitnehmerstift 37, der in ein Langloch 38 an der Steuerscheibe 30 eingreift auf die Steuerscheibe 30 und die Steuerfläche 21, welche als vorspringende Kante am Umfang der Steuerscheibe 30 ausgebildet ist, übertragen.

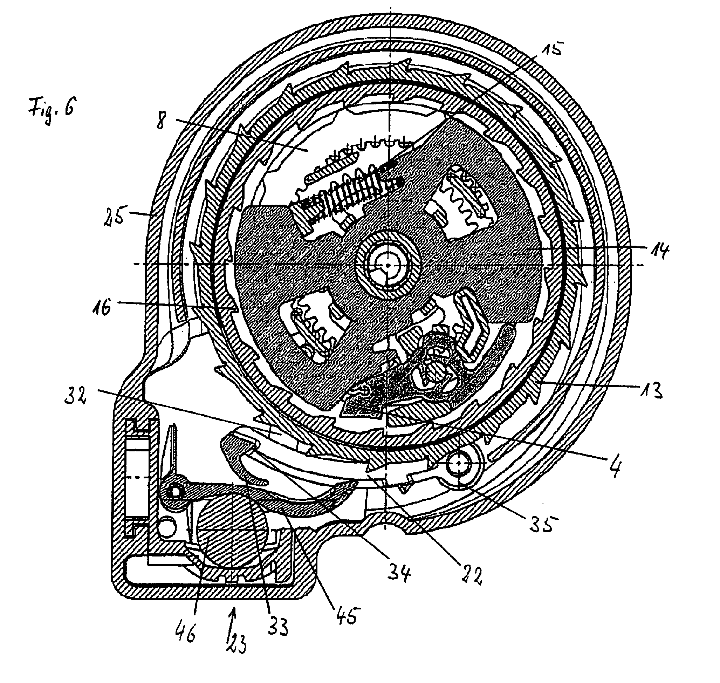

Die an der Steuerscheibe 30 in Form einer Nockenfläche oder Nockenkante vorgesehene Steuerfläche 21 besitzt einen größeren Durchmesser als der übrige Teil der Steuerscheibe 30. Die Steuerscheibe 30 ist drehbar um die Gurtspulenachse 6, vorzugsweise am Wellenteil 24, gelagert. Bei der Deaktivierung der fahrzeugsensitiven Blockiereinrichtung 23, welche in den Figuren 4 bis 7 dargestellt ist, wird die Steuerscheibe 30 soweit gedreht, dass ein Steuerabgriff 32 am Betätigungselement 22 mit der Steuerfläche 21 in Eingriff kommt. Dabei wird, wie es in Figur 6 dargestellt ist, dass Betätigungselement 22 um seine am Gehäusteil 25 vorgesehene Drehlagerung 35 geschwenkt, so dass ein am Betätigungsteil 22 vorgesehenes Eingriffsteil 33 eine Sperrklinke 45 der fahrzeugsensitiven Blockiereinrichtung 23 außer Eingriff mit der Außenverzahnung des drehfest mit der Gurtspule 2 verbundenen Klinkenrades 13 hält. Dabei wird auch eine als Kugel ausgebildete Trägheitsmasse 46 so weit in ihre Aufnahme eingedrückt, dass eine Bewegung verhindert wird. Auf diese Weise wird bei der geschilderten Deaktivierung der fahrzeugsensitiven Blockiereinrichtung 23 eine Geräuschdämmung erreicht, da die beweglichen Teile dieser Blockiereinrichtung durch die zweite Hemmungseinrichtung in unbeweglichem Zustand gehalten werden. Dies gilt im Übrigen auch für die beweglichen Teile der gurtbandsensitiven Blockiereinrichtung, bei welcher die Klinke 4 und die damit zusammenwirkende Trägheitsmasse 14 durch die Hemmungseinrichtung 1 in unbeweglichem Zustand gehalten werden.

Das Betätigungsteil 22 ist als Hebel ausgebildet, welcher im Drehlager 35 am Gehäuseteil 25 gelagert ist. Mit Hilfe einer am Gehäuseteil 25 abgestützten Feder 31, welche als Plattfeder ausgebildet sein kann, wird das Betätigungsteil 22 in Richtung auf den Umfang der Steuerscheibe 30 zu, vorgespannt. Es kann eine anders gestaltete Federvorspannung, beispielsweise eine Spiralfeder oder federelastisches Material, vorgesehen sein. Am zum Drehlager 35 entgegengesetzten Ende des Hebels sind am Betätigungselement 22 das Eingriffsteil 33, welches, wie oben erläutert, mit der fahrzeugsensitiven Blockiereinrichtung 23 in Verbindung tritt, sowie das Eingriffsteil 34 vorgesehen, welches mit der Außenverzahnung des Klinkenrades 13 in Verbindung treten kann. Hierdurch wird die oben schon erwähnte Kindersitzverriegelung veranlasst. Dabei ragt der Steuerabgriff 32 in eine am Umfangsrand der Steuerscheibe 36 vorgesehene Ausnehmung 47 (Fig. 5). Um einen unbehinderten Gurtbandauszug für die Kindersitzverriegelung zu erreichen, ist in dieser Steuerscheibe 36 eine kreissektorförmige Ausnehmung 39 vorgesehen, durch welche der Mitnehmerstift 37 ragt.

Das Betätigungselement 22 ist am Gehäusteil 25 außerhalb eines im Wesentlichen zylindrisch geformten Vorsprunges 48, der an der Innenwand des Gehäuseteils 25 vorgesehen ist, angeordnet. An der Innenseite dieses zylindrischen Vorsprunges 48 befinden sich die Blockierinnenverzahnung 16 und die exzentrische Führungsfläche 44 (Fig. 1 und 5) für das Steuerrad 8, um den Steuerabgriff 32 mit den beiden Steuerscheiben 30 und 36 in Verbindung bringen zu können, ragt der Steuerabgriff 32 durch eine Gehäuseausnehmung 40 im zylindrischen Vorsprung 48.

Für eine gemeinsame Drehlagerung der Bestandteile der Hemmungseinrichtung für die gurtbandsenstive Blockiereinrichtung und/oder der Hemmungseinrichtung für die fahrzeugsensitive Blockiereinrichtung und um einen vereinfachten Zusammenbau dieser Bestandteile im Gehäuseteil 25 zu gewährleisten, sind diese Bestandteile bevorzugt an dem gemeinsamen Wellenteil 24 gelagert. Dieses vorzugsweise als Hohlwelle ausgebildete Wellenteil 24 ist seinerseits drehbar an einem mit der Gurtspulenachse 6 ausgerichteten Achsstummel 49, welcher von der Innenwand in das Innere des Gehäuseteils 25 vorspringt, drehbar gelagert. Das Wellenteil 24 steht in Drehantriebsverbindung mit der Gurtspule 2. Dies kann über die Antriebswelle 17 erfolgen.

Das Gehäuseteil 25 ist bevorzugt als auf einem Rahmen 41 des Gurtaufrollers aufsteckbares kappenförmiges Gehäuseteil ausgebildet. Aufgrund dieser besonderen Ausbildung können alle um die Gurtspulenachse 6 drehbaren Teile der jeweiligen Hemmungseinrichtung und des jeweils zugeordneten Getriebes im Gehäuseteil 25 auf dem Wellenteil 24 vormontiert werden.

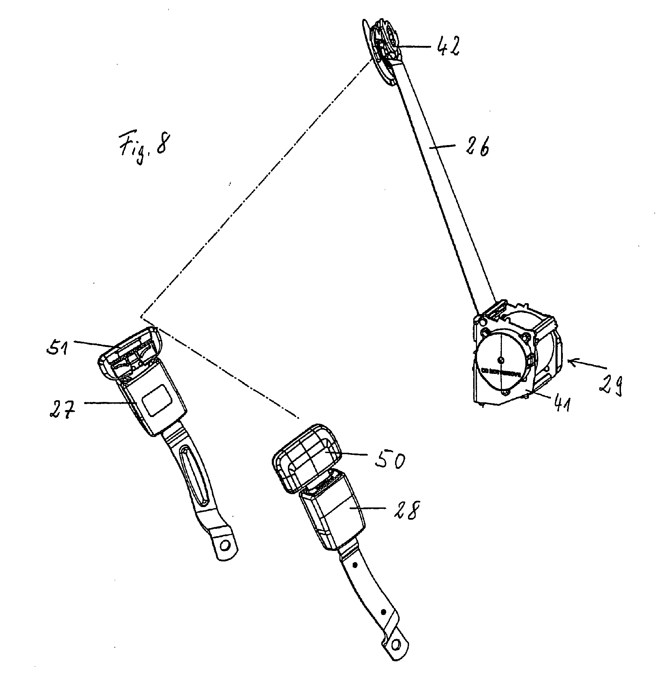

Wie anhand der Figur 8 erläutert wird, kommt ein Gurtaufroller 29 mit einer erfindungsgemäßen Hemmungseinrichtung für die gurtbandsensitive Blockiereinrichtung und/oder mit einer Hemmungseinrichtung für die fahrzeugsensitive Blocklereinrichtung bei einem Fahrzeugsitz bevorzugt zur Anwendung, welcher zur Vergrößerung des Gepäckraumes im Fahrzeug klappbar und insbesondere in der Bodenfläche des Gepäckraumes versenkbar ist. Bei derartigen Fahrzeugsitzen sind zu beiden Seiten der Sitzfläche Gurtschlösser 27 und 28 (Fig. 8) vorgesehen. Der Gurtaufroller 29 kann in der Sitzlehne oder im Bereich der Sitzlehne oder auch im Bereich des Fahrzeugaufbaus, insbesondere im Dachbereich oder in der Nähe davon angeordnet sein. Der Sicherheitsgurt 26 ist mit zwei Steckzungen 50, 51 ausgestattet, von denen die eine Steckzunge 50 am Gurtbandende befestigt ist und die andere Steckzunge 51 am Sicherheitsgurt 26 verschiebbar gelagert ist. Die am Ende des Sicherheitsgurtes 26 befestigte Steckzunge 50 wird in das Gurtschloss 28 eingesteckt, welches an der Sitzseite sich befindet, an welcher auch der Gurtaufroller 29 im Fahrzeug angeordnet ist. Bei dem in Figur 8 dargesellten Ausführungsbeispiel wird die am Ende des Sicherheitsgurtes 26 befindliche Steckzunge 50 in das Gurtschloss 28 eingesteckt. Hierdurch wird am Ende des Sicherheitsgurtes 26 eine Fixierung erreicht, wie bei einem normalen Endbeschlag eines Dreipunktsicherheitsgurtes. Beim Angurten wird die Steckzunge 51 in das auf der anderen Sitzseite befindliche Gurtschloss 27 eingesteckt, so dass eine Dreipunktsicherheitsgutanordnung erreicht wird. Der Sicherheitsgurt 26 kann dabei direkt vom Gurtaufroller 29 oder über eine gegebenenfalls höhenverstellbare Umlenkeinrichtung 42 zu den Gurtschlössern 27 und 28 geführt werden.

In vielen Fällen löst der Fahrzeuginsasse beim Ablegen des Sicherheitsgurtes nur die Steckzunge 51 aus dem Gurtschloss 27 und vergisst die Steckzunge 50 auch aus dem Gurtschloss 28 zu entfernen. Wenn beim Umklappen des Fahrzeugsitzes und insbesondere beim Versenken des Fahrzeugsitzes im Gepäckbodenbereich die Gurtschlösser 27 und 28 mit verschwenkt werden, wird der Sicherheitsgurt 26 vom Gurtaufroller 29 abgezogen. Hierbei besteht die Gefahr, dass eine der beiden Blockiereinrichtungen, insbesondere die gurtbandsensitive Blockiereinrichtung blockiert und ein weiteres Ausziehen des Sicherheitsgurtes 26 aus dem Gurtaufroller 29 verhindert. Ein weiteres Umklappen und insbesondere ein Versenken des Fahrzeugsitzes im Bodenbereich wird dadurch erschwert oder vom Fahrzeuginsassen aufgrund mehrmaliger Fehlversuche für unmöglich erachtet.

Durch die oben erläuterten Hemmungseinrichtungen, insbesondere durch die Hemmungseinrichtung für die gurtbandsensitive Blockiereinrichtung, wird im Schwenkbereich des klappbaren Sitzes und insbesondere im Schwenkbereich der Gurtschlösser 27 und 28, insbesondere des an der Seite des Gurtaufrollers 29 befindlichen Gurtschlosses ein Blockieren der gurtbandsensitiven Blockiereinrichtung und/oder der fahrzeugsensitiven Blockiereinrichtung verhindert.

### Bezugszeichenliste

- 1: Hemmungseinrichtung
- 2: Gurtspule
- 3: Anschlagfläche
- 4: gurtbandsensitive Klinke
- 5: Untersetzungsgetriebe
- 6: Gurtspulenachse
- 7: Antriebsrad
- 8: Steuerrad
- 9: Langloch
- 10: Mitnehmerstift
- 11: Anschlagelement (Anschlagstift)
- 12: gurtbandsensitive Blockiereinrichtung
- 13: Klinkenrad
- 14: Trägheitsmasse
- 15: Feder
- 16: Blockierinnenverzahnung
- 17: Antriebswelle
- 18: Ringlager
- 19: Antriebsrad
- 20: Innenzahnkranz
- 21: Steuerfläche (Steuerkante)
- 22: Betätigungselement
- 23: fahrzeugsensitive Blockiereinrichtung
- 24: gemeinsames Wellenteil
- 25: Gehäuseteil
- 26: Sicherheitsgurt
- 27: Gurtschloss
- 28: Gurtschloss
- 29: Gurtaufroller
- 30: Steuerscheibe
- 31: Feder
- 32: Steuerabgriff
- 33: Eingriffsteil am Fahrzeugsensor
- 34: Eingriffsteil am Klinkenrad
- 35: Drehlager
- 36: Steuerscheibe
- 37: Mitnehmerstift
- 38: Langloch
- 39: Ausnehmung
- 40: Gehäuseausnehmung
- 41: Rahmen
- 42: Umlenkeinrichtung
- 43: Exzenter
- 44: exzentrische Führungsfläche
- 45: Sperrklinke
- 46: Trägheitsmasse
- 47: Ausnehmung
- 48: zylindrischer Vorsprung
- 49: Achsstummel
- 50: Steckzunge
- 51: Steckzunge

## Patentansprüche

1. Fahrzeugsitz mit einer Dreipunktsicherheitsgurtanordnung für einen Fahrzeugsicherheitsgurt aufweisend einen Gurtaufroller (29) mit einer Gurtspule (2), auf welcher der Sicherheitsgurt (26) beim Bandaufwickeln aufgerollt und von welcher der Sicherheitsgurt bei Gurtbandauszug abgewickelt werden kann, einer gurtbandsensitiven Blockiereinrichtung, welche bei einem Gurtbandauszug mit überhöhter Beschleunigung den Gurtbandauszug blockiert, wobei am Sicherheitsgurt (26) zwei Steckzungen (50, 51) vorgesehen sind, die in an beiden Seiten eines Fahrzeugsitzes vorgesehene Gurtschlösser (27, 28) einsteckbar sind, und von denen die eine Steckzunge (50) am Grutbandende befestigt ist und die andre Steckzunge (51) am Sicherheitsgurt (26) verschiebbar gelagert ist, und eine Sitzrückenlehne des Fahrzeugsitzes oder der Fahrzeugsitz umklappbar oder verschenkbar ausgebildet ist, **dadurch gekennzeichnet, dass** die beiden Gurtschlösser (27, 28) beim Umklappen oder Schwenken der Sitzrückenlehne des Fahrzeugsitzes oder des Fahrzeugsitzes mitverschwenkt sind, und dass eine Hemmungsrichtung (1), welche mit der Gurtspule (2) in Drehverbindung steht und die Aktivierung der gurtbandsensitiven Blockiereinrichtung (12) verhindert, ausgebildet ist, am Anfang des Gurtbandauszuges zumindest im Schwenkbereich des an der Seite des Gurtaufrollers (29) befindlichen Gurtschlosses (28), in welches die am Ende des Sicherheitsgurtes (26) befestigte Steckzunge (50) eingesteckt ist, die gurtbandsensitive Blockiereinrichtung (12) inaktiv zu halten, wobei die Hemmungseinrichtung (1) eine um die Gurtspulenachse (6) mit Untersetzung bewegte Kreissegmentbahn (3) aufweist, entlang welcher eine mit der Gurtspule (2) mitdrehende gurtbandsensitive Sperreinrichtung zum Verhindern einer die Blockierung einleitenden Bewegung geführt ist.

2. Fahrzeugsitz mit einer Dreipunktsicherheitsgurtanordnung nach Anspruch 1,
**dadurch gekennzeichnet, dass** die Hemmungseinrichtung (1) die gurtbandsensitive Blockiereinrichtung (12) beim Versenken des Fahrzeugsitzes im Gepäckbodenbereich des Fahrzeugs und gleichzeitigem Verschwenken der Gurtschlösser (27, 28) inaktiv halt.

3. Fahrzeugsitz mit einer Dreipunktsicherheitsgurtanordnung nach Anspruch 1, **dadurch gekennzeichnet, dass** die Sperreinrichtung als Klinke (4) ausgebildet ist, welche entlang einer Anschlagsfläche der Kreissegmentbahn (3) zur Verhinderung der die Blockierung einleitenden Klinkenbewegung mit Eingriff oder anliegend geführt ist.

4. Fahrzeugsitz mit einer Dreipunktsicherheitsgurtanordnung nach einem der Ansprüche 1 bis 3, **dadurch gekennzeichnet, dass** die Hemmungseinrichtung (1) unmittelbar bei Beginn des Bandauszugs die Aktivierung der gurtbandsensitiven Blockiereinrichtung (12) verhindert.

5. Fahrzeugsitz mit einer Dreipunktsicherheitsgurtanordnung nach einem der Ansprüche 1 bis 4, **dadurch gekennzeichnet, dass** zwischen Gurtspule (2) und Hemmungseinrichtung (1) ein Untersetzungsgetriebe (5) geschaltet ist, welches die Drehung der Hemmungseinrichtung (1) gegenüber der Drehung der Gurtspule (2) untersetzt.

6. Fahrzeugsitz mit einer Dreipunktsicherheitsgurtanordnung nach Anspruch 5, **dadurch gekennzeichnet, dass** das Untersetzungsgetriebe (5) die Drehbewegung der Gurtspule (2) auf die kreissegmentförmige Führungsbahn (3) überträgt.

7. Fahrzeugsitz mit einer Dreipunktsicherheitsgurtanordnung nach einem der Ansprüche 1 bis 6, **dadurch gekennzeichnet, dass** die Hemmungseinrichtung (1) zwischen dem Untersetzungsgetriebe (5) und der Gurtspule (2) angeordnet ist.

8. Fahrzeugsitz mit einer Dreipunktsicherheitsgurtanordnung nach einem der Ansprüche 5 bis 7, **dadurch gekennzeichnet, dass** das Untersetzungsgetriebe (5) ein von der Gurtspule (2) angetriebenes Antriebsrad (7) aufweist, welches mit einem mit der Hemmungseinrichtung (1), drehfest verbundenem Steuerrad (8) in Dreheingriff steht.

9. Fahrzeugsitz mit einer Dreipunktsicherheitsgurtanordnung nach Anspruch 8, **dadurch gekennzeichnet, dass** das Antriebsrad (7) als Innenrad und das Steuerrad (8) als Außenrad ausgebildet sind.

10. Fahrzeugsitz mit einer Dreipunktsicherheitsgurtanordnung nach Ansprüche 8 oder 9, **dadurch gekennzeichnet, dass** das Antriebsrad (7) um die Gurtspulenachse (6) drehbar gelagert ist und das Steuerrad (8) eine exzentrische Bewegung um die Gurtspulenachse (6) ausführt.

11. Fahrzeugsitz mit einer Dreipunktsicherheitsgurtanordnung nach einem der Ansprüche 8 bis 10, **dadurch gekennzeichnet, dass** die Drehbewegung des Antriebsrades (7) über ein Zwischenrad auf das um die Gurtspulenachse (6) drehbare Steuerrad (8) übertragbar ist.

12. Fahrzeugsitz mit einer Dreipunktsicherheitsgurtanordnung nach einem der Ansprüche 8 bis 11, **dadurch gekennzeichnet, dass** das Steuerrad (8) über einen in ein radial sich erstreckendes Langloch (9) eingreifenden Mitnehmerstift (10) mit der kreissegmentförmigen Führungsfläche (3) drehfest verbunden ist.

13. Fahrzeugsitz mit einer Dreipunktsicherheitsgurtanordnung nach Anspruch 3, **dadurch gekennzeichnet, dass** an der gurtbandsensitiven Klinke (4) ein Anschlagelement (11), vorgesehen ist und dass das Anschlagelement (11) an der als Anschlagfläche ausgebildeten Kreissegmentbahn (3) zur Verhinderung der Aktivierung der gurtbandsensitiven Blockiereinrichtung (12) anliegt.

## Claims

1. A vehicle seat comprising a three-point safety belt arrangement for a vehicle safety belt, comprising a belt retractor (29) with a belt reel (2) onto which the safety belt (26) is wound when the strap is reeled in and from which the safety belt can be unwound when the belt strap is pulled out, a belt strap-sensitive blocking device which blocks extension of the belt strap when the belt strap is extended with excessive acceleration, there being provided on the safety belt (26) two insertion tongues (50, 51) which can be inserted into belt buckles (27, 28) which are provided on both sides of a vehicle seat, and of which one insertion tongue (50) is fastened at the end of the belt strap and the other insertion tongue (51) is displaceably mounted on the safety belt (26), and a back rest of the vehicle seat or the vehicle seat is made such that it can fold down or pivot, **characterised in that** the two belt buckles (27, 28) are also pivoted when the back rest of the vehicle seat or the vehicle seat is folded down or pivoted, and that a retarding device (1), which is rotatably connected to the belt reel (2) and prevents activation of the belt strap-sensitive blocking mechanism (12), is designed to keep the belt strap-sensitive blocking mechanism (12) inactive at the start of the belt strap extension, at least in the pivot region of the belt buckle (28) located on the side of the belt retractor (29) and in which the insertion tongue (50) fastened to the end of the safety belt (26) is inserted, the retarding device (1) having a circular segmental track (3) which is moved about the belt reel axis (6) with gear reduction and along which a belt strap-sensitive locking device which rotates with the belt reel (2) is guided in order to prevent any movement which initiates blocking.

2. The vehicle seat comprising a three-point safety belt arrangement according to Claim 1, **characterised in that** the retarding device (10) keeps the belt strap- sensitive blocking mechanism (12) inactive when the vehicle seat is lowered in the luggage floor space of the vehicle and the belt buckles (27, 28) are pivoted at the same time.

3. The vehicle seat comprising a three-point safety belt arrangement according to Claim 1, **characterised in that** the locking device is in the form of a latch (4) which is guided along a stop face of the circular segmental track (3) with engagement or abuttingly in order to prevent the latching movement which initiates blocking.

4. The vehicle seat comprising a three-point safety belt arrangement according to any of Claims 1 to 3, **characterised in that** the retarding device (1) prevents activation of the belt strap-sensitive blocking mechanism (12) at the very beginning of the belt extension.

5. The vehicle seat comprising a three-point safety belt arrangement according to any of Claims 1 to 4, **characterised in that** a reduction gear mechanism (5), which reduces the rotation of the retarding device (1) in relation to the rotation of the belt reel (2), is connected between the belt reel (2) and the retarding device (1).

6. The vehicle seat comprising a three-point safety belt arrangement according to Claim 5, **characterised in that** the reduction gear mechanism (5) transfers the rotational movement of the belt reel (2) to the circular segmentally-shaped guideway (3).

7. The vehicle seat comprising a three-point safety belt arrangement according to any of Claims 1 to 6, **characterised in that** the retarding device (1) is disposed between the reduction gear mechanism (5) and the belt reel (2).

8. The vehicle seat comprising a three-point safety belt arrangement according to any of Claims 5 to 7, **characterised in that** the reduction gear mechanism (5) has a drive wheel (7) which is driven by the belt reel (2) and which is in rotatable engagement with a control wheel (8) that is non-rotatably connected to the retarding device (1).

9. The vehicle seat comprising a three-point safety belt arrangement according to Claim 8, **characterised in that** the drive wheel (7) is in the form of an inner wheel and the control wheel (8) is in the form of an outer wheel.

10. The vehicle seat comprising a three-point safety belt arrangement according to Claims 8 or 9, **characterised in that** the drive wheel (7) is mounted rotatably about the belt reel axis (6) and the control wheel (8) performs an eccentric movement about the belt reel axis (6).

11. The vehicle seat comprising a three-point safety belt arrangement according to any of Claims 8 to 10, **characterised in that** the rotational movement of the drive wheel (7) can be transferred via an intermediate wheel to the control wheel (8) that is rotatable about the belt reel axis (6).

12. The vehicle seat comprising a three-point safety belt arrangement according to any of Claims 8 to 11, **characterised in that** the control wheel (8) is non-rotatably connected to the circular segmentally-shaped guide face (3) via a driving pin (10) which engages with a radially extending elongate hole (9).

13. The vehicle seat comprising a three-point safety belt arrangement according to Claim 3, **characterised in that** a stop element (11) is provided on the belt strap-sensitive latch (4), and that the stop element (11) abuts the circular segmental track (3) designed in the form of a stop face in order to prevent activation of the belt strap-sensitive blocking mechanism (12).

## Revendications

1. Siège de véhicule pourvu d'un agencement de ceinture de sécurité à trois points destiné à une ceinture de sécurité de véhicule présentant un enrouleur de ceinture (29) pourvu d'une bobine de ceinture (2) sur laquelle peut s'enrouler la ceinture de sécurité (26) lors d'un rembobinage de la sangle et depuis laquelle peut se dévider la ceinture de sécurité lors d'un dévidage de la sangle, un dispositif de blocage sensible à la sangle de la ceinture, lequel bloque le dévidage de la sangle lorsque celle-ci se dévide avec une accélération excessive, dans lequel il est prévu, sur la ceinture de sécurité (26), deux languettes enfichables (50, 51) qui peuvent être enfichées dans des verrous de ceinture (27, 28) situés des deux côtés d'un siège de véhicule, dont une languette enfichable (50) est fixée à l'extrémité de la sangle de la ceinture et l'autre languette enfichable (51) est installée déplaçable sur la ceinture de sécurité (26), et un dossier du siège de véhicule, ou le siège de véhicule, est conçu pour être rabattable ou pivotant, **caractérisé en ce que**, lors du rabattement ou du pivotement du dossier du siège de véhicule, ou du siège de véhicule, les deux verrous de ceinture (27, 28) pivotent également, et **en ce qu'**un dispositif de retenue (1), qui est solidaire en rotation de la bobine de ceinture (2) et qui empêche l'activation du dispositif de blocage (12) sensible à la sangle de la ceinture, est conçu pour maintenir inactif le dispositif de blocage (12) sensible à la sangle de la ceinture au début du dévidage de la sangle, au moins dans la zone de pivotement du verrou de ceinture (28), situé sur le côté de l'enrouleur de ceinture (29), dans lequel est enfichée la languette enfichable (50) fixée à l'extrémité de la ceinture de sécurité (26), le dispositif de retenue (1) présentant une voie en arc de cercle (3) qui est déplacée autour de l'axe de bobine de ceinture (6) avec un rapport de réduction et le long de la laquelle est guidé un dispositif de verrouillage sensible à la sangle de la ceinture et solidaire en rotation de la bobine de ceinture (2), qui est destiné à empêcher un déplacement générateur de blocage.

2. Siège de véhicule pourvu d'un agencement de ceinture de sécurité à trois points selon la revendication 1, **caractérisé en ce que** le dispositif de retenue (1) maintient inactif le dispositif de blocage (12) sensible à la sangle de la ceinture lorsque le siège de véhicule est rentré dans le plancher du coffre du véhicule, avec pivotement concomitant des verrous de ceinture (27, 28).

3. Siège de véhicule pourvu d'un agencement de ceinture de sécurité à trois points selon la revendication 1, **caractérisé en ce que** le dispositif de verrouillage est conçu sous la forme d'un cliquet (4) qui est guidé, en prise ou par juxtaposition, le long d'une surface de butée de la voie en arc de cercle (3) pour empêcher le déplacement du cliquet générateur de blocage.

4. Siège de véhicule pourvu d'un agencement de ceinture de sécurité à trois points selon l'une des revendications 1 à 3, **caractérisé en ce que** le dispositif de retenue (1) empêche l'activation du dispositif de blocage (12) sensible à la sangle de la ceinture dès le début du dévidage de la sangle.

5. Siège de véhicule pourvu d'un agencement de ceinture de sécurité à trois points selon l'une des revendications 1 à 4, **caractérisé en ce qu'**il est disposé un engrenage de réduction (5) entre la bobine de ceinture (2) et le dispositif de retenue (1), lequel engrenage de réduction réduit la rotation du dispositif de retenue (1) par rapport à la rotation de la bobine de ceinture (2).

6. Siège de véhicule pourvu d'un agencement de ceinture de sécurité à trois points selon la revendication 5, **caractérisé en ce que** l'engrenage de réduction (5) transmet la rotation de la bobine de ceinture (2) à la voie de guidage en arc de cercle (3).

7. Siège de véhicule pourvu d'un agencement de ceinture de sécurité à trois points selon l'une des revendications 1 à 6, **caractérisé en ce que** le dispositif de retenue (1) est disposé entre l'engrenage de réduction (5) et la bobine de ceinture (2).

8. Siège de véhicule pourvu d'un agencement de ceinture de sécurité à trois points selon l'une des revendications 5 à 7, **caractérisé en ce que** l'engrenage de réduction (5) présente un pignon menant (7) mené par la bobine de ceinture (2), lequel est en prise en rotation avec une roue directrice (8) qui est non rotationnellement solidaire du dispositif de retenue (1).

9. Siège de véhicule pourvu d'un agencement de ceinture de sécurité à trois points selon la revendication 8, **caractérisé en ce que** le pignon menant (7) est conçu sous la forme d'une roue intérieure et la roue directrice (8) sous la forme d'une roue extérieure.

10. Siège de véhicule pourvu d'un agencement de ceinture de sécurité à trois points selon l'une des revendications 8 ou 9, **caractérisé en ce que** le pignon menant (7) est monté rotatif autour de l'axe de bobine de ceinture (6) et la roue directrice (8) effectue un déplacement excentrique autour de l'axe de bobine de ceinture (6).

11. Siège de véhicule pourvu d'un agencement de ceinture de sécurité à trois points selon l'une des revendications 8 à 10, **caractérisé en ce que** le déplacement rotatif du pignon menant (7) peut être transmis, par l'intermédiaire d'une roue intermédiaire, à la roue directrice (8) qui est rotative autour de l'axe de bobine de ceinture (6).

12. Siège de véhicule pourvu d'un agencement de ceinture de sécurité à trois points selon l'une des revendications 8 à 11, **caractérisé en ce que** la roue directrice (8) est non rotationnellement solidaire de la surface de guidage en forme d'arc de cercle (3) par le biais d'une broche d'entraînement (10) qui vient en prise dans un trou oblong (9) à prolongement radial.

13. Siège de véhicule pourvu d'un agencement de ceinture de sécurité à trois points selon la revendication 3, **caractérisé en ce qu'**il est prévu un élément de butée (11) sur le cliquet (4) sensible à la sangle de ceinture et **en ce que** l'élément de butée (11) est disposé contre la voie en arc de cercle (3) conçue sous la forme d'une surface de butée pour empêcher l'activation du dispositif de blocage (12) sensible à la sangle de la ceinture.
